# FASCICULE DE BREVET EUROPEEN

(11) **EP 0 433 148 B1**
(45) Date de publication et mention de la délivrance du brevet: **06.04.1994**
(21) Numéro de dépôt: 90403500.3
(22) Date de dépôt: 07.12.1990
(51) Int. Cl.: C04B 41/90, G02B 5/08, C25D 5/54

(54) **Procédé pour réaliser un dépôt métallique adhérant sur le carbone, et miroir obtenu par ce procédé**
Verfahren zum Aufbringen einer haftenden Beschichtung auf einem Kohlenstoffsubstrat und so hergestellte Spiegel
Process for making a metallic deposition on a carbon substrate and mirror obtained by this process

(30) Priorité: 13.12.1989 FR 8916486
(43) Date de publication de la demande: 19.06.1991
(73) Titulaire: Office National d'Etudes et de Recherches Aérospatiales (O.N.E.R.A.), 92320 Châtillon-sous-Bagneux (FR)
(72) Inventeur: Alperine, Serge, F-75014 Paris (FR); Josso, Pierre, F-92130 Issy Les Moulineaux (FR)
(74) Mandataire: Netter, André

(56) Documents cités:
- EP-A- 0 176 055
- EP-A- 0 309 593
- EP-A- 0 323 366
- FR-A- 2 552 554
- GB-A- 958 376
- GB-A- 2 081 695
- US-A- 4 444 467
- AMERICAN CERAMIC SOCIETY BULLETIN. vol. 61, no. 8, août 1982, COLUMBUS US pages 843 - 846; D. P. Stinton et al: "Deposition and characterization of pyrocarbon coatings produced by use ofCO2 dilution"
- PLATING AND SURFACE FINISHING. vol. 71, no. 10, octobre 1984, EAST ORANGE US pages 72 - 75; D. W. Baudrand: "Cleaning and preparation of ceramic and metallized ceramic materials for plating"

## Description

L'invention concerne un procédé pour réaliser un dépôt métallique sur un substrat massif à base de carbone, notamment pour la fabrication de miroirs de faible inertie, plus particulièrement pour les faisceaux lasers de puissance.

On entend ici par substrat à base de carbone un substrat formé soit d'un matériau comprenant au moins 50% en poids de carbone non combiné, soit d'un matériau composite formé d'une phase dispersée et d'une matrice comprenant au moins 50% en poids de carbone non combiné.

L'invention vise la réalisation d'un dépôt métallique à la surface extérieure d'un substrat massif, c'est-à-dire d'un substrat formé d'un bloc unitaire, qu'il soit poreux ou non, à l'exclusion d'un dépôt à la surface des particules élémentaires d'un substrat divisé, ces particules ayant par exemple la forme de grains ou de fibres.

La Demande de Brevet français FR-A-2 552 554 décrit un procédé de fabrication d'un miroir comprenant notamment le dépôt d'un métal (rhénium, rhodium, molybdène ou tungstène) sur un substrat de graphite, et la rectification du revêtement métallique pour obtenir une forme de surface souhaitée. L'abrégé de cette Demande de Brevet indique qu'on sait déposer sur le graphite des couches parfaitement adhérentes de ces métaux.

Cependant, selon l'expérience des auteurs de la présente invention, l'adhérence d'un métal quel qu'il soit sur le graphite est un problème très difficile, pour la résolution duquel le document considéré ne fournit aucun moyen. Une excellente adhérence du revêtement est nécessaire d'une part pour permettre l'usinage mécanique de celui-ci sans arrachement, d'autre part pour que le miroir supporte les variations de température, et les gradients de température élevés dus à l'incidence de rayons de forte puissance, compte tenu de la différence entre le coefficient de dilatation thermique du carbone et ceux des métaux, qui est très importante même lorsqu'on choisit la qualité de graphite de façon à la limiter, comme proposé dans la Demande antérieure.

Le but de l'invention est de fournir un procédé permettant d'obtenir un dépôt métallique présentant effectivement une forte adhérence vis-à-vis du substrat à base de carbone.

A cet effet, dans le procédé selon l'invention, on réalise à la surface du substrat une couche superficielle formée par un pré-dépôt poreux d'un matériau contenant du carbone et/ou un carbure, adhérant fortement au substrat, ayant une surface spécifique élevée et présentant une structure colonnaire avec des pores ouverts d'une profondeur d'au moins 1 nm, et on dépose sur cette couche superficielle, en remplissant sensiblement lesdits pores, un matériau métallique ayant une forte affinité pour le carbone, comprenant au moins un métal choisi parmi le cérium, le cobalt, le chrome, le fer, le hafnium, l'iridium, l'osmium, le palladium, le platine, le rhodium, le ruthénium, le lanthane, le manganèse, le molybdène, le nickel, le silicium, le tantale, le thorium, le titane, l'uranium et le tungstène.

D'une façon générale, lorsqu'on indique dans le présent mémoire qu'un matériau ou une couche contient ou comprend un constituant, il faut entendre que ce constituant est présent en une quantité appréciable, voire même majoritaire, pouvant éventuellement représenter la totalité ou la quasi-totalité du matériau ou de la couche considéré.

La couche superficielle étant formée par un pré-dépôt poreux d'un matériau contenant du carbone et/ou un carbure, son adhérence vis-à-vis du substrat est due à la similitude de nature chimique entre le carbone du substrat et le carbone de la couche superficielle, ou à l'affinité chimique entre le carbone du substrat et le carbure de la couche superficielle. Cette adhérence est particulièrement élevée lorsque la couche superficielle est obtenue par pyrolyse, notamment à partir de composés organiques ou organométalliques, ou de silanes.

Le dépôt métallique proprement dit présente également une forte affinité pour le carbone, liée à l'existence d'au moins un composé binaire entre chacun des métaux choisis et le carbone. Mais cette propriété ne conduirait pas à une adhérence suffisante du revêtement métallique vis-à-vis du substrat, et ne conduit pas non plus à elle seule à une adhérence suffisante vis-à-vis de la couche superficielle. C'est pourquoi il est nécessaire que cette dernière présente une surface spécifique élevée avec des pores ouverts d'une profondeur d'au moins 1 nm, et que le dépôt métallique remplisse sensiblement ces pores, ce qui accroît la surface de contact entre le dépôt métallique et la couche superficielle et provoque un accrochage mécanique mutuel.

L'épaisseur de la couche superficielle et la profondeur de ses pores ouverts sont de préférence comprises entre 1 nm et 100 µm, et plus particulièrement entre 10 nm et 10 µm.

Le dépôt métallique peut quant à lui être obtenu par une méthode quelconque, pour autant qu'elle permette une bonne pénétration du dépôt dans les pores de la couche superficielle. On peut procéder par exemple à un dépôt par voie électrolytique, après imprégnation des pores par le bain électrolytique, ou à un dépôt par voie chimique autocatalytique, ou encore à un dépôt électrophorétique ou par cémentation à basse pression.

Bien entendu le revêtement métallique peut être formé d'au moins deux couches de matériaux différents et/ou obtenues par des modes de dépôts différents, par exemple de deux couches dont la première est réalisée dans des conditions favorisant un bon remplissage des pores, et dont la seconde est réalisée dans des conditions propres à permettre d'obtenir rapidement l'épaisseur de revêtement souhaitée, et/ou à fournir les propriétés souhaitables pour l'usinage ultérieur et l'utilisation finale de la pièce revêtue.

Le nickel et le cobalt sont les métaux les plus courants convenant pour ce dépôt, et peuvent être utilisés, séparément ou ensemble, pour former au moins l'essentiel de celui-ci.

Le carbone constitutif du substrat peut être par exemple à l'état de graphite ou à l'état vitreux ou amorphe. Toutes les formes intermédiaires partiellement graphitées et partiellement amorphes sont possibles, y compris les brais de houille ou de pétrole plus ou moins graphitisés. Dans le cas où le substrat est en matériau composite, sa phase dispersée peut être fibreuse ou granulaire, et peut être elle-même, ou non, à base de carbone.

Le procédé selon l'invention prévoit également l'usinage du revêtement métallique pour obtenir une pièce ayant une forme et un état de surface souhaités, cet usinage comprenant le cas échéant un polissage à la qualité optique.

L'invention vise également une pièce à base de carbone munie d'un revêtement métallique, obtenu par le procédé défini ci-dessus, et notamment un miroir poli à la qualité optique.

D'autres caractéristiques et avantages de l'invention ressortiront de la description ci-après de quelques exemples de réalisation, et des dessins annexés dans lesquels :
- les figures 1a, 1b et 1c représentent schématiquement, respectivement, deux phases successives d'un processus de dépôt électrolytique utilisable dans le procédé selon l'invention, et le produit résultant ;
- les figures 2a, 2b et 2c illustrent schématiquement, respectivement, deux phases d'un procédé modifié non conforme à l'invention, et le produit résultant également non conforme à l'invention.

### EXEMPLE 1

On part d'un parallélépipède de graphite préalablement rectifié de dimensions approximatives 40 x 20 x 15 mm³.

On effectue un pré-dépôt de carbone par décomposition thermique de composés organiques riches en carbone. Plus précisément, on utilise un mélange contenant 45% en poids de cyclohexane et 55% en poids de xylène. Il s'agit d'un mélange azéotrope dont le point d'ébullition est d'environ 75°C, à la pression atmosphérique, ce qui permet de saturer facilement un gaz tracteur tel que l'argon.

On place le substrat dans une enceinte balayée par un courant d'argon (pour éviter la présence d'oxygène) et on le porte à la température de 600°C. On remplace alors l'argon sec par de l'argon saturé par le mélange azéotropique cyclohexane-xylène. Le balayage est réglé, de façon connue en soi, pour que la vitesse du gaz soit à peu près nulle dans la direction de l'écoulement, et que celui-ci soit par conséquent de type laminaire, au niveau du substrat. On obtient ainsi un dépôt de carbone du type dit laminaire rugueux.

Cette couche superficielle, ou couche d'adaptation, de couleur noire sombre, a une épaisseur d'environ 1 µm. Sa structure est colonnaire et poreuse, c'est-à-dire qu'elle est formée de colonnes séparées par des pores ouverts s'étendant sur toute son épaisseur.

Le substrat ainsi recouvert est introduit sans courant dans un bain de dépôt électrolytique de nickel ayant la composition suivante :
- sulfamate de nickel 350g/l
- chlorure de nickel 3,4g/l
- acide borique 30g/l.

Ce bain contient, en plus des constituants principaux ci-dessus, des agents mouillants et éventuellement des brillanteurs. Sa température de fonctionnement est de 45°C, la densité de courant applicable étant de 3 A/dm².

Après une demi-heure d'immersion, grâce à la présence du mouillant, les pores de la couche superficielle ou couche d'adaptation sont pratiquement entièrement imprégnés d'électrolyte. On met alors la pièce sous courant et du nickel commence de se déposer sur toute la surface de la couche d'adaptation mouillée d'électrolyte, y compris la surface des pores. Le dépôt de nickel remplit ces derniers et est poursuivi jusqu'à une épaisseur de 250 µm.

On rectifie le dépôt par passes successives de 0,02 mm jusqu'à obtention d'une surface homogène sur toute la face traitée. Puis on polit le dépôt, aucun décollement de la couche métallique n'étant observé.

La figure la montre schématiquement le substrat 1 et une anode 2 immergés dans l'électrolyte 3 depuis un certain temps, et non encore polarisés. Des ions nickel 4 sont présents sur toute la surface de la couche superficielle, y compris celle des pores 5.

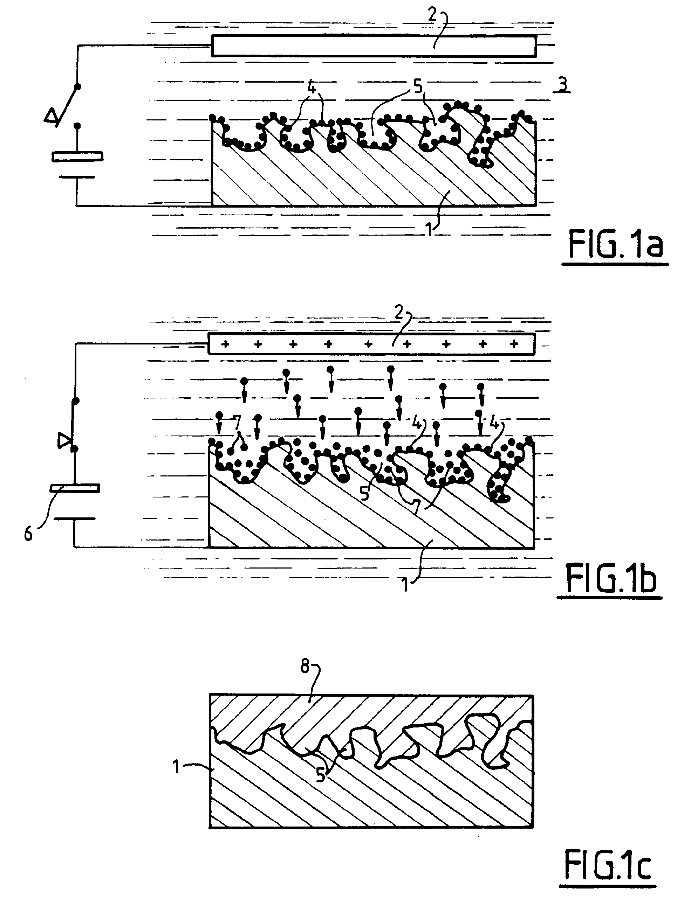

A la figure 1b, le substrat 1 et l'anode 2 sont reliés à une source de courant 6. Les ions 4 sont réduits au contact du substrat tandis que d'autres ions nickel 7, provenant de la masse du bain, pénètrent à leur tour dans les pores 5 pour être ultérieurement réduits. On obtient en fin d'opération, comme montré à la figure 1c, un revêtement de nickel 8 recouvrant la surface du substrat 1 et solidement ancré à celui-ci par pénétration dans les pores 5 de la couche superficielle.

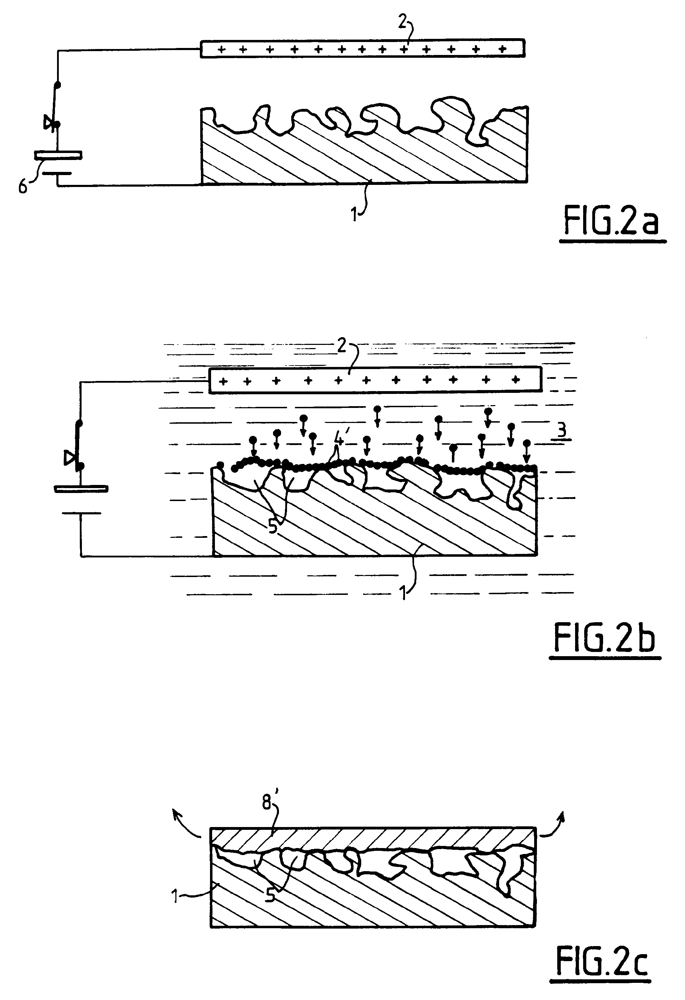

Si on avait, comme montré à la figure 2a, polarisé le substrat 1 et l'anode 2 au moyen de la source de courant 6 avant de les immerger dans le bain 3 (figure 2b) les ions nickel 4' se seraient réduits à l'entrée des pores 5 sans pénétrer dans ceux-ci, et on aurait obtenu un dépôt 8' (figure 2c) non ancré dans les pores 5 et n'adhérant pas suffisamment au substrat 1.

### EXEMPLE 2

Le substrat de départ est semblable à celui de l'exemple 1.

La couche superficielle est réalisée par oxydation ménagée, selon le mode opératoire suivant :
- on introduit le substrat dans un four tubulaire préalablement chauffé à 700°C ;
- après avoir obturé les deux extrémités du tube laboratoire, on attend environ 10 minutes, correspondant à la consommation totale de l'oxygène présent ;
- on refroidit le four, et on en sort l'échantillon lorsque sa température est inférieure à 400°C.

Ce traitement conduit à une oxydation sélective des sites les plus actifs du graphite, qui rend la surface de l'échantillon poreuse.

Le dépôt de nickel et l'usinage sont ensuite effectués comme dans l'exemple 1.

### EXEMPLE 3

On utilise un substrat cylindrique ayant approximativement un diamètre de 40 mm et une épaisseur de 8 mm, préalablement rectifié sur ses deux grandes faces, en un matériau composite commercialisé sous la référence AEROLOR 30, formé de fibres de carbone tissées dans trois directions orthogonales et d'une matrice de carbone.

On effectue un pré-dépôt, un dépôt métallique et un usinage comme décrit dans l'exemple 1, l'épaisseur du dépôt de nickel n'étant toutefois que de 200 µm.

### EXEMPLE 4

On opère comme dans l'exemple 3, en remplaçant le pré-dépôt de carbone pyrolytique décrit dans cet exemple par un dépôt chimique en phase vapeur à basse pression commercialisé par la Société LE CARBONE LORRAINE sous la dénomination "Carbone pyrolytique mince 5/146".

L'épaisseur du dépôt de nickel est de 250 µm.

### EXEMPLE 5

On opère comme dans l'exemple 4, le dépôt chimique en phase vapeur à basse pression étant celui commercialisé par la Société LE CARBONE LORRAINE sous la dénomination "Carbone pyrolytique épais 5/145".

### EXEMPLE 6

On utilise un substrat cylindrique de diamètre 40 mm et d'épaisseur 7 mm, en un matériau composite commercialisé sous la référence AEROLOR 20, formé de fibres de carbone orientées dans deux directions et d'une matrice de carbone.

Ce substrat est traité comme décrit dans l'exemple 5.

### EXEMPLE 7

On utilise un substrat cylindrique de diamètre 40 mm et d'épaisseur 10 mm, en un matériau composite commercialisé sous la référence AEROLOR 00, formé de fibres courtes de carbone dispersées de façon isotrope dans une matrice de carbone.

Ce substrat est traité comme décrit dans l'exemple 4.

### EXEMPLE 8

Dans cet exemple, on soumet un substrat semblable à celui de l'exemple 7 au traitement décrit dans l'exemple 5.

### EXEMPLE 9

Le substrat et le pré-dépôt sont les mêmes que dans l'exemple 7.

On immerge alors l'échantillon pendant 10 minutes dans une solution d'hydrazine 2,06 M (soit 100 ml/l d'hydrate d'hydrazine), contenant 10 ml/l de mouillant. On plonge ensuite l'échantillon dans un bain de nickel chimique auto-catalytique ultra-pur tel que décrit dans le Brevet français 2 590 595. Le dépôt commence dès que la température de fonctionnement de 90 ± 2°C est atteinte. On obtient un dépôt de nickel chimique ultra-pur de 50 µm d'épaisseur dont la surface libre est strictement parallèle à la surface initiale, la croissance du dépôt de nickel chimique auto-catalytique étant strictement perpendiculaire à la surface du substrat.

Après polissage, on ne constate aucun décollement du dépôt.

### EXEMPLE 10

Cet exemple diffère de l'exemple 9 uniquement par le pré-dépôt de carbone, réalisé comme dans l'exemple 5.

### EXEMPLE 11

On part d'un substrat de même nature que dans les exemples 7 à 10, sous forme d'un disque de diamètre 40 mm et d'épaisseur 8 mm.

Le traitement diffère de celui de l'exemple 9 en ce que le pré-dépôt de carbone est remplacé par un pré-dépôt de carbure de silicium.

Pour ce faire on introduit l'échantillon dans une enceinte où règne une dépression (pression comprise entre 33 et 133 Pa). On le chauffe à une température comprise entre 1100 et 1150°C, puis on injecte dans l'enceinte du tétraméthylsilane à l'état de vapeur, qui se pyrolyse pour donner du carbure de silicium.

En une demi-heure on obtient un dépôt de couleur noire dont l'épaisseur n'excède pas 3 µm. Les conditions opératoires sont choisies de façon connue en soi pour obtenir une morphologie de dépôt à croissance colonnaire à grains fins, dont les colonnes de croissance ne sont pas liées entre elles, de telle sorte que le dépôt présente une forte porosité de surface.

### EXEMPLE 12

On procède comme dans l'exemple 11, jusqu'au dépôt de nickel chimique dont l'épaisseur est limitée à 25 µm.

On réalise ensuite un dépôt de nickel électrolytique de 250 µm d'épaisseur, puis une rectification et un polissage comme décrit dans l'exemple 1.

Le dépôt intermédiaire de nickel chimique permet de réaliser ensuite le dépôt de nickel électrolytique, malgré l'absence de conductibilité électrique du pré-dépôt de carbure de silicium.

Cet exemple illustre la possibilité de réaliser au moins deux couches successives de métal par des techniques différentes. De la même façon il est possible de déposer successivement des couches de métaux différents.

Dans tous les exemples précédents, la rectification éventuelle et le polissage n'ont provoqué aucun décollement du dépôt, ce qui montre son excellente adhérence au substrat.

### EXEMPLE 13

Le substrat et le traitement de pré-dépôt sont les mêmes que dans l'exemple 7.

On réalise ensuite un dépôt électrolytique de cobalt à l'aide d'un bain de composition suivante :
- sulfate de cobalt heptahydraté 337g/l
- chlorure de cobalt hexahydraté 50g/l
- acide borique 37g/l
- pH3 à 4.

Ce bain contient, en plus des constituants principaux ci-dessus, des agents mouillants et éventuellement des brillanteurs. Sa température de fonctionnement est de 50°C, la densité de courant applicable étant 3 A/dm².

La mise sous tension est effectuée après une demi-heure d'imprégnation comme décrit dans l'exemple 1.

Le traitement est poursuivi jusqu'à obtention d'un dépôt de cobalt de 100 µm d'épaisseur, parfaitement adhérent.

### EXEMPLE 14

On procède comme dans l'exemple 4, les opérations d'usinage se terminant par un polissage poussé jusqu'à la qualité optique. On obtient un miroir ne présentant qu'une frange en lumière polychromatique visible, ce qui indique que l'épaisseur de ses irrégularités de surface ne dépasse pas 0,1 µm.

Cette caractéristique est maintenue après une dizaine de cycles de chauffage à 160°C et de refroidissement rapide.

Un miroir identique a été examiné par des techniques interférométriques laser. Le chauffage était assuré par un jet d'air à température régulée en face arrière. A 80°C ce miroir ne présentait que deux franges.

Un autre miroir a été, en outre, examiné par des techniques d'interférométrie laser en assurant le chauffage au moyen d'un laser à CO₂, la puissance absorbée par le miroir étant de 10^{W}/cm². Après plusieurs dizaines d'illuminations d'une durée de 5 secondes le miroir ne présentait qu'une seule frange dans le visible.

A titre de comparaison, on a essayé de réaliser un miroir dans les mêmes conditions, mais en supprimant la couche d'adaptation de carbone pyrolytique. Le revêtement de nickel s'est décollé au cours du polissage.

### EXEMPLE 15

On se propose de fabriquer un miroir plan sur un substrat carboné par la technique dite de la "réplique optique".

Pour ce faire on utilise un substrat cylindrique de diamètre 40 mm et d'épaisseur 10 mm, en un matériau composite commercialisé sous la référence AEROLOR 00, formé de fibres courtes de carbone dispersées de façon isotrope dans une matrice de carbone.

Ce substrat reçoit le pré-dépôt, ou couche d'adaptation, décrit dans l'exemple 4.

D'autre part on prépare une contreforme, communément appelée "master", plane et parfaitement polie, de la surface à reproduire sur le substrat.

On enduit ensuite le substrat d'une couche de colle constituée d'une ou plusieurs résines polymérisables. On y dépose une feuille mince de nickel ou d'aluminium connue pour ses qualités réfléchissantes. L'épaisseur de la feuille métallique peut être comprise entre 10 et 50 µm.

On applique ensuite le master sur l'ensemble substrat + couche d'adaptation + colle + feuille métallique, à l'aide d'une presse. Pendant cette opération la colle pénètre les pores de la couche d'adaptation et assure un mouillage parfait de la feuille métallique. Cette pression est appliquée le temps nécessaire à la polymérisation de la colle.

Après la séparation du master du miroir ainsi formé on constate que l'on a obtenu une surface réfléchissante possédant la même qualité optique que la contreforme et adhérant parfaitement sur le substrat carboné.

Cette technique, connue par ailleurs, et qui permet de fabriquer en une seule fois des miroirs optiquement traités, ne pouvait être appliquée, jusqu'à ce jour, sur des substrats carbonés du fait de la mauvaise adhérence des colles sur ce type de matériau.

L'adjonction d'une couche d'adaptation présentant une surface spécifique élevée et présentant des pores ouverts permet un accrochage mécanique de la colle dans lesdits pores et, ainsi, la fabrication d'un miroir par cette technique.

## Revendications

1. Procédé pour réaliser un dépôt métallique à la surface extérieure d'un substrat massif à base de carbone, caractérisé en ce qu'on réalise à la surface du substrat une couche superficielle formée par un pré-dépôt poreux d'un matériau contenant du carbone et/ou un carbure, adhérant fortement au substrat sous-jacent, ayant une surface spécifique élevée et présentant une structure colonnaire avec des pores ouverts d'une profondeur d'au moins 1 nm, et qu'on dépose sur cette couche superficielle, en remplissant sensiblement lesdits pores, un matériau métallique ayant une forte affinité pour le carbone, comprenant au moins un métal choisi parmi le cérium, le cobalt, le chrome, le fer, le hafnium, l'iridium, l'osmium, le palladium, le platine, le rhodium, le ruthénium, le lanthane, le manganèse, le molybdène, le nickel, le silicium, le tantale, le thorium, le titane, l'uranium et le tungstène.

2. Procédé selon la revendication 1, caractérisé en ce que l'épaisseur de la couche superficielle et la profondeur de ses pores ouverts sont comprises entre 1 nm et 100 µm.

3. Procédé selon la revendication 2, caractérisé en ce que l'épaisseur de la couche superficielle et la profondeur de ses pores ouverts sont comprises entre 10 nm et 10 µm.

4. Procédé selon l'une des revendications précédentes, caractérisé en ce que la couche superficielle comprend du carbone pyrolytique.

5. Procédé selon l'une des revendications 1 à 3, caractérisé en ce que la couche superficielle comprend du carbure de silicium obtenu par pyrolyse d'un silane.

6. Procédé selon l'une des revendications précédentes, caractérisé en ce que le dépôt métallique est effectué par voie électrolytique, après imprégnation des pores de la couche superficielle par le bain électrolytique.

7. Procédé selon l'une des revendications 1 à 5, caractérisé en ce que le dépôt métallique est effectué par voie chimique autocatalytique.

8. Procédé selon l'une des revendications précédentes, caractérisé en ce que le dépôt métallique est formé essentiellement de nickel et/ou de cobalt.

9. Procédé selon l'une des revendications précédentes, caractérisé en ce que le substrat comprend au moins 50% en poids de carbone non combiné.

10. Procédé selon l'une des revendications précédentes, caractérisé en ce que le substrat est en un matériau composite formé d'une phase dispersée et d'une matrice comprenant au moins 50% en poids de carbone non combiné.

11. Procédé selon l'une des revendications précédentes, caractérisé en ce que la carbone du substrat est au moins partiellement amorphe.

12. Procédé selon l'une des revendications précédentes, caractérisé en ce que le carbone du substrat est au moins partiellement sous forme de graphite.

13. Procédé selon l'une des revendications précédentes, caractérisé en ce qu'on usine le revêtement métallique pour obtenir une pièce ayant une forme et un état de surface souhaités.

14. Procédé selon la revendication 13, caractérisé en ce qu'on polit le revêtement métallique à la qualité optique.

15. Pièce à base de carbone munie d'un revêtement métallique, obtenue par le procédé selon l'une des revendications précédentes.

16. Miroir obtenu par le procédé selon la revendication 14.

17. Pièce comprenant un substrat massif à base de carbone présentant à sa surface extérieure une couche superficielle formée par un pré-dépôt poreux d'un matériau contenant du carbone et/ou un carbure, adhérant fortement au substrat sous-jacent, ayant une surface spécifique élevée et présentant une structure colonnaire avec des pores ouverts d'une profondeur d'au moins 1 nm, et un revêtement recouvrant la couche superficielle et remplissant sensiblement lesdits pores, en un matériau métallique ayant une forte affinité pour le carbone, comprenant au moins un métal choisi parmi le cérium, le cobalt, le chrome, le fer, le hafnium, l'iridium, l'osmium, le palladium, le platine, le rhodium, le ruthénium, le lanthane, le manganèse, le molybdène, le nickel, le silicium, le tantale, le thorium, le titane, l'uranium et le tungstène.

18. Miroir selon la revendication 17, dont la surface réfléchissante est formée par la surface libre dudit revêtement métallique.

19. Application du miroir selon l'une des revendications 16 et 18 aux systèmes lasers de puissance.

## Patentansprüche

1. Verfahren zur Herstellung einer Metallabscheidung an der Außenfläche eines massiven Substrats auf der Basis von Kohlenstoff, dadurch gekennzeichnet, daß an der Oberfläche des Substrats eine durch eine poröse Vorabscheidung eines Materials, das Kohlenstoff und/oder ein Carbid enthält, gebildete Oberflächenschicht hergestellt wird, die stark an dem darunterliegenden Substrat haftet, wobei sie eine erhöhte spezifische Oberfläche aufweist und eine säulenförmige Struktur mit offenen Poren mit einer Tiefe von wenigstens 1 nm aufweist, und daß auf dieser Oberflächenschicht im wesentlichen unter Füllung der Poren ein metallisches Material mit starker Affinität zu Kohlenstoff aufgebracht wird, das wenigstens ein Metall aus der Gruppe von Cerium, Kobalt, Chrom, Eisen, Hafnium, Iridium, Osmium, Palladium, Platin, Rhodium, Ruthenium, Lanthan, Mangan, Molybdän, Nickel, Silicium, Tantal, Thor, Titan, Uran und Wolfram aufweist.

2. Verfahren nach Anspruch 1, dadurch gekennzeichnet, daß die Dicke der Oberflächenschicht und die Tiefe ihrer offenen Poren zwischen 1 nm und 1 µm liegen.

3. Verfahren nach Anspruch 2, dadurch gekennzeichnet, daß die Dicke der Oberflächenschicht und die Tiefe ihrer offenen Poren zwischen 10 nm und 10 µm liegen.

4. Verfahren nach einem der vorhergehenden Ansprüche, dadurch gekennzeichnet, daß die Oberflächenschicht pyrolytischen Kohlenstoff aufweist.

5. Verfahren nach einem der Ansprüche 1 bis 3, dadurch gekennzeichnet, daß die Oberflächenschicht durch die Pyrolyse eines Silans erhaltenes Silciumcarbid aufweist.

6. Verfahren nach einem der vorhergehenden Ansprüche, dadurch gekennzeichnet, daß die Metallabscheidung nach der Imprägnierung der Poren der Oberflächenschicht durch das Elektrolytbad auf elektrolytischem Wege durchgeführt wird.

7. Verfahren nach einem der Ansprüche 1 bis 5, dadurch gekennzeichnet, daß die Metallabscheidung auf autokatalytischem, chemischem Wege durchgeführt wird.

8. Verfahren nach einem der vorhergehenden Ansprüche, dadurch gekennzeichnet, daß die Metallabscheidung im wesentlichen aus Nickel und/oder Kobalt gebildet ist.

9. Verfahren nach einem der vorhergehenden Ansprüche, dadurch gekennzeichnet, daß das Substrat wenigstens 50 Gew.% ungebundenen Kohlenstoff aufweist.

10. Verfahren nach einem der vorhergehenden Ansprüche, dadurch gekennzeichnet, daß das Substrat aus einem Verbundmaterial besteht, das aus einer dispersen Phase und einer Matrix gebildet ist, die wenigstens 50 Gew.% ungebundenen Kohlenstoff aufweist.

11. Verfahren nach einem der vorhergehenden Ansprüche, dadurch gekennzeichnet, daß der Kohlenstoff des Substrats wenigstens teilweise amorph ist.

12. Verfahren nach einem der vorhergehenden Ansprüche, dadurch gekennzeichnet, daß der Kohlenstoff des Substrats wenigstens teilweise in Form von Graphit vorliegt.

13. Verfahren nach einem der vorhergehenden Ansprüche, dadurch gekennzeichnet, daß der Metallüberzug bearbeitet wird, um ein Werkstück mit gewünschter Form und Oberflächenzustand zu erhalten.

14. Verfahren nach Anspruch 13, dadurch gekennzeichnet, daß der Metallüberzug auf optische Qualität poliert wird.

15. Werkstück auf der Basis von Kohlenstoff, das mit einem Metallüberzug versehen ist, der durch das Verfahren nach einem der vorhergehenden Ansprüche erhalten wurde.

16. Spiegel, der durch das Verfahren nach Anspruch 14 erhalten wurde.

17. Werkstück mit einem massiven Substrat auf der Basis von Kohlenstoff, das an seiner Außenfläche eine durch eine poröse Vorabscheidung eines Materials, das Kohlenstoff und/oder ein Carbid enthält, gebildete Oberflächenschicht aufweist, die stark an dem darunterliegenden Substrat haftet, eine erhöhte spezifische Oberfläche und eine säulenförmige Struktur mit offenen Poren mit einer Tiefe von wenigstens 1 nm aufweist, sowie einen Überzug, der die Oberflächenschicht überdeckt und im wesentlichen die Poren füllt, aus einem metallischen Material mit starker Affinität zu Kohlenstoff und mit wenigstens einem Metall aus der Gruppe von Cerium, Kobalt, Chrom, Eisen, Hafnium, Iridium, Osmium, Palladium, Platin, Rhodium, Ruthenium, Lanthan, Mangan, Molybdän, Nickel, Silicium, Tantal, Thor, Titan, Uran und Wolfram.

18. Spiegel nach Anspruch 17, dessen Reflexionsfläche aus der freien Fläche des Metallüberzugs gebildet ist.

19. Anwendung des Spiegels nach einem der Ansprüche 16 und 18 auf Leistungslasersysteme.

## Claims

1. Process for producing a metal deposit on the outer surface of a solid carbon-based substrate, characterised in that a surface layer formed by a porous pre-deposit of a material containing carbon and/or a carbide which adheres firmly to the subjacent substrate, which has a high specific surface area, and which has a columnar structure with open pores having a depth of at least 1 nm is produced on the surface of the substrate; and in that a metal material having a great affinity for carbon, comprising at least one metal selected from among cerium, cobalt, chromium, iron, hafnium, iridium, osmium, palladium, platinum, rhodium, ruthenium, lanthanum, manganese, molybdenum, nickel, silicon, tantalum, thorium, titanium, uranium and tungsten is deposited on this surface layer such that it substantially fills these pores.

2. Process according to Claim 1, characterised in that the thickness of the surface layer and the depth of its open pores are between 1 nm and 100 µm.

3. Process according to Claim 2, characterised in that the thickness of the surface layer and the depth of its open pores are between 10 nm and 10 µm.

4. Process according to any one of the preceding claims, characterised in that the surface layer comprises pyrolytic carbon.

5. Process according to any one of Claims 1 to 3, characterised in that the surface layer comprises silicon carbide obtained by pyrolysis of a silane,

6. Process according to any one of the preceding claims, characterised in that the metal deposit is produced electrolytically, after impregnation of the pores in the surface layer with the electrolytic bath.

7. Process according to any one of Claims 1 to 5, characterised in that the metal deposit is produced by autocatalytic chemical means.

8. Process according to any one of the preceding claims, characterised in that the metal deposit is substantially formed of nickel and/or cobalt.

9. Process according to any one of the preceding claims, characterised in that the substrate comprises at least 50 % by weight of free carbon.

10. Process according to any one of the preceding claims, characterised in that the substrate is made of a composite material formed by a dispersed phase and by a matrix comprising at least 50 % by weight of free carbon.

11. Process according to any one of the preceding claims, characterised in that the carbon of the substrate is at least partially amorphous.

12. Process according to any one of the preceding claims, characterised in that the carbon of the substrate is at least partially in the form of graphite.

13. Process according to any one of the preceding claims, characterised in that the metal coating is machined to obtain a part having the desired surface condition and shape.

14. Process according to Claim 13, characterised in that the metal coating is polished to optical quality.

15. Carbon-based part provided with a metal coating, obtained by the process according to any one of the preceding claims.

16. Mirror obtained by the process according to Claim 14.

17. Part comprising a solid carbon-based substrate having on its outer surface a surface layer formed by a porous pre-deposit of a material containing carbon and/or a carbide which adheres firmly to the subjacent substrate, which has a high specific surface area, and which has a columnar structure with open pores having a depth of at least 1 nm, and a coating of a metal material having a great affinity for carbon and comprising at least one metal selected from among cerium, cobalt, chromium, iron, hafnium, iridium, osmium, palladium, platinum, rhodium, ruthenium, lanthanum, manganese, molybdenum, nickel, silicon, tantalum, thorium, titanium, uranium and tungsten, which covers the surface layer, and which substantially fills these pores.

18. Mirror according to Claim 17, of which the reflective surface is formed by the free surface of the metal coating.

19. Application of the mirror according to either of Claims 16 and 18 to power laser systems.
